# EUROPEAN PATENT APPLICATION

(11) **EP 4 757 337 A1**
(43) Date of publication of application: **10.06.2026**
(21) Application number: 25212348.4
(22) Date of filing: 30.10.2025
(51) Int. Cl.: H04N 25/627, H04N 25/78

(54) **CLAMP CONTROL CIRCUIT AND IMAGE SENSING DEVICE INCLUDING THE SAME**

(30) Priority: 04.12.2024 KR 20240178905
(71) Applicant: SK hynix Inc., Bubal-eub Icheon-si Gyeonggi-do 17336 (KR)
(72) Inventor: KIM, Dong Ju, Icheon-si, Gyeonggi-do 17336 (KR); PARK, Da Hwan, Icheon-si, Gyeonggi-do 17336 (KR); CHOI, Jeong Ik, Icheon-si, Gyeonggi-do 17336 (KR)
(74) Representative: Isarpatent

(57) **Abstract**

An image sensing device for generating image data is disclosed. A clamp control circuit included in the image sensing device includes a sensing circuit configured to sense a voltage level of a pixel signal to output a sensing signal; and a clamping circuit coupled to a column line, and configured to control a voltage level of a clamp voltage control signal in response to a voltage level of the sensing signal, and control a level of a clamp voltage in response to a clamp enable signal, the clamp voltage controlled based on a voltage level of the clamp voltage control signal and provided to the column line.

## Description

### TECHNICAL FIELD

The technology and embodiments of the present disclosure generally relate to an image sensing device for generating image data.

### BACKGROUND

Generally, a Complementary Metal Oxide Semiconductor (CMOS) Image Sensor (CIS) has been developed to have lower power consumption, lower costs, and smaller sizes than other competitive products, such that CMOS image sensors (CISs) have been intensively researched and rapidly come into widespread use. Specifically, CMOS image sensors (CISs) have been developed to have higher image quality than other competitive products, such that the application scope of CMOS image sensors (CISs) has recently been extended to video applications that require higher resolution and higher frame rate as compared to competitive products.

However, in high-illuminance environments, when the amount of light exceeds a dynamic range of a pixel, the black sun phenomenon may occur in the image sensor. The black sun phenomenon refers to a situation where, when photographing a high-illuminance subject such as the sun or bright lighting, areas that should appear bright instead appear dark due to charge overflow inside the pixel. As a result, certain regions may appear black like sunspots. When light sensed by the image sensor has high illuminance, signal charges exceeding the total capacity of a photodiode are generated, causing a black sun phenomenon in which charges overflow into a unit pixel or a floating diffusion region.

### SUMMARY

Various embodiments of the present disclosure relate to an image sensing device that can prevent the black sun phenomenon by controlling a clamp voltage level in response to a voltage level of a pixel signal.

In accordance with an embodiment of the present disclosure, a clamp control circuit may include a sensing circuit configured to sense a voltage level of a pixel signal to output a sensing signal; and a clamping circuit coupled to a column line, and configured to control a voltage level of a clamp voltage control signal in response to a voltage level of the sensing signal, and control a level of a clamp voltage in response to a clamp enable signal, the clamp voltage controlled based on a voltage level of the clamp voltage control signal and provided to the column line.

In accordance with another embodiment of the present disclosure, an image sensing device may include a pixel configured to output a pixel signal to a column line; a clamp control circuit configured to sense a voltage level of the pixel signal to output a sensing signal, and control, in a clamping operation mode, a clamp voltage in response to the sensing signal, the clamp voltage controlled to a level greater than or equal to a reference voltage and provided to the column line; and an analog-to-digital converter (ADC) configured to perform an analog-to-digital conversion operation on a voltage of the column line based on a ramp signal.

It is to be understood that both the foregoing general description and the following detailed description of the embodiments of the present disclosure are illustrative and are intended to provide further description of the embodiments as claimed.

### BRIEF DESCRIPTION OF THE DRAWINGS

The above and other advantageous features and beneficial aspects of the embodiments of the present disclosure will become readily apparent with reference to the following detailed description when considered in conjunction with the accompanying drawings.
FIG. 1 is a block diagram illustrating an image sensing device based on some embodiments of the present disclosure.
FIG. 2 is a circuit diagram illustrating a pixel of a pixel array shown in FIG. 1 based on some embodiments of the present disclosure.
FIG. 3 is a circuit diagram illustrating a clamp control circuit shown in FIG. 1 based on some embodiments of the present disclosure.
FIGS. 4 and 5 are diagrams illustrating operations of the clamp control circuit shown in FIG. 3 based on some embodiments of the present disclosure.
FIG. 6 is a circuit diagram illustrating an analog-to-digital converter (ADC) shown in FIG. 1 based on some embodiments of the present disclosure.
FIG. 7 is a timing diagram illustrating operations of the image sensing device according to the embodiment of FIG. 3.
FIG. 8 is a circuit diagram illustrating another embodiment of the clamp control circuit shown in FIG. 1 based on the present disclosure.
FIG. 9 is a timing diagram illustrating operations of the image sensing device according to the embodiment of FIG. 8.

### DETAILED DESCRIPTION

The present disclosure provides embodiments and examples of an image sensing device for generating image data that may be used in configurations to substantially address one or more technical or engineering issues and to mitigate limitations or disadvantages encountered in some other image signal processors. Some embodiments of the present disclosure relate to an image sensing device that can prevent the black sun phenomenon by controlling a clamp voltage level in response to a voltage level of a pixel signal. In recognition of the issues above, the image sensing device based on some embodiments of the present disclosure can prevent the black sun phenomenon by improving the clamp margin of the pixel signal, thereby improving a dynamic range.

Reference will now be made in detail to some embodiments of the present disclosure, which are illustrated in the accompanying drawings. Wherever possible, the same reference numbers will be used throughout the drawings to refer to the same or like parts. Since the disclosed embodiments are susceptible to various modifications and alternative forms, specific embodiments thereof are shown by way of example in the drawings. However, the present invention should not be construed as being limited to the embodiments set forth herein.

Hereinafter, various embodiments will be described with reference to the accompanying drawings. However, it should be understood that the present invention is not limited to specific embodiments, but includes various modifications, equivalents and/or alternatives of the embodiments. The embodiments of the present disclosure may provide a variety of advantageous effects which may be directly or indirectly recognized by one of ordinary skill in the art.

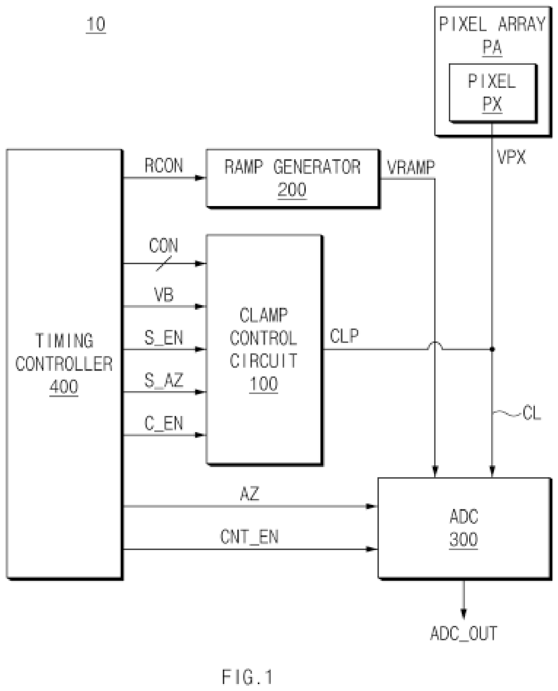

FIG. 1 is a block diagram illustrating an image sensing device 10 based on some embodiments of the present disclosure.

Referring to FIG. 1, the image sensing device 10 may include a pixel array (PA), a clamp control circuit 100, a ramp generator 200, an analog-to-digital converter (ADC) 300, and a timing controller 400. The components of the image sensing device 10 illustrated in FIG. 1 are discussed by way of example only, and this embodiment may encompass numerous other changes, substitutions, variations, alterations, and modifications.

The pixel array (PA) may include a plurality of pixels (PXs) arranged in rows and columns. In one embodiment, the plurality of pixels (PXs) can be arranged in a two-dimensional (2D) pixel array (PA) including rows and columns. In another embodiment, the plurality of pixels can be arranged in a three-dimensional (3D) pixel array (PA). The plurality of pixels (PXs) may convert an optical signal into an electrical signal on a pixel basis or a pixel group basis, and may output a pixel signal (VPX) to a column line (CL). For example, the voltage of the pixel signal (VPX) may be a voltage generated through a reset operation of the corresponding pixel (PX), or may be a voltage generated through an integration operation of the corresponding pixel (PX).

In one embodiment, the pixels (PXs) in a pixel group of the pixel array (PA) may share at least one internal circuitry. The pixel array (PA) may receive, from a row driver, driving signals (to be described later), including a row selection signal, a pixel reset signal, a transfer signal, etc. Upon receiving the driving signals, corresponding imaging pixels (PXs) in the pixel array (PA) may be activated to perform the operations corresponding to the row selection signal, the pixel reset signal, and the transfer signal.

The clamp control circuit 100 may detect the voltage level of the pixel signal (VPX) based on at least one control signal (CON), a bias voltage (VB), a sensing enable signal (S_EN), a sensing auto-zero signal (S_AZ), and a clamp enable signal (C_EN) received from the timing controller 400, and may control a level of a clamp voltage (CLP) in response to the sensed voltage level. The clamp control circuit 100 may control the level of the clamp voltage (CLP) that is provided to a column line (CL) when the pixel signal (VPX) for a reset sampling operation is output.

In some embodiments, the clamp control circuit 100 may operate in one of a bias operation mode and a clamping operation mode. In the bias operation mode, the clamp control circuit 100 may bias a voltage level of the pixel signal (VPX) and may transmit the biased pixel signal (VPX) to the ADC 300. In the bias operation mode, the clamp control circuit 100 may control the clamp voltage (CLP) that is applied to the column line (CL) to be less than or equal to a preset reference voltage so that the clamp control circuit 100 may not affect the voltage level of the pixel signal (VPX). In the clamping operation mode, the clamp control circuit 100 may detect the voltage level of the pixel signal (VPX), and may control the level of the clamp voltage (CLP) to increase when the voltage level of the detected pixel signal (VPX) is less than the preset reference voltage. That is, in the clamping operation mode, the clamp control circuit 100 may increase the voltage level of the column line (CL) to be greater than or equal to the preset reference voltage in response to the level of the clamp voltage (CLP), so that the clamp control circuit 100 can secure a clamp operation margin. In some embodiments, the preset reference voltage may be set to the voltage level of a reset signal (i.e., RG signal to be described later).

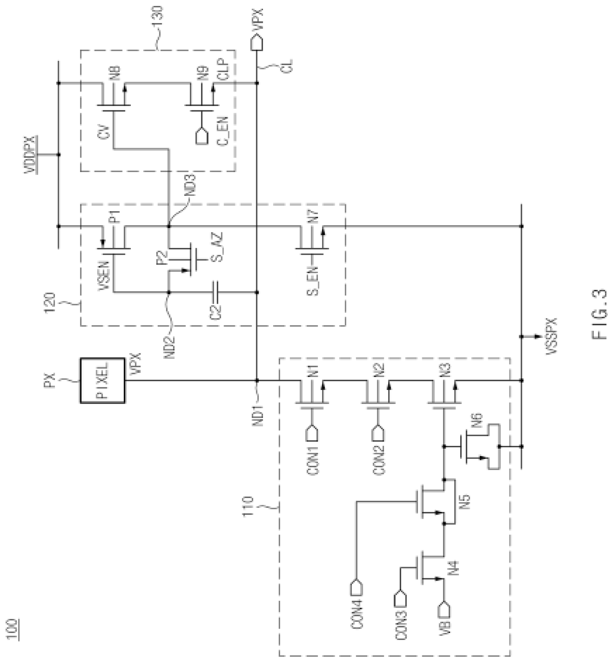

A more detailed circuit and operations of the clamp control circuit 100 will be described later with reference to FIGS. 3 to 5 and FIG. 7.

The ramp generator 200 may generate a ramp signal (VRAMP) required for the analog-to-digital conversion (ADC) operation of the ADC 300 upon receiving the control signal (RCON) from the timing controller 400, and may supply the ramp signal (VRAMP) to the ADC 300.

The ADC 300 may sequentially sample and hold voltage levels of the reference signal and the image signal, which are provided from each of a plurality of column lines from the pixel array (PA), may convert the resultant reference signal and the resultant image signal into digital signals, and may output the digital signals. The reference signal may be an electrical signal that is provided to the ADC 300 when a sensing node of an imaging pixel (e.g., floating diffusion node) is reset, and the image signal may be an electrical signal that is provided to the ADC 300 when photocharges generated by the imaging pixel are accumulated in the sensing node. The reference signal indicating unique reset noise of each pixel and the image signal indicating the intensity of incident light may be generically called a pixel signal (VPX) as necessary. The ADC 300 can receive the ramp signal (VRAMP) from the ramp generator 200, receive the pixel signal (VPX) from the pixel array (PA), and generate and output ADC data (ADC_OUT) based on the ramp signal (VRAMP) and the pixel signal (VPX). The ADC 300 may be implemented as a ramp-compare type ADC that uses the ramp signal (VRAMP) of the ramp generator 200.

The timing controller 400 may control at least one of the clamp control circuit 100, the ramp generator 200, and the ADC 300. The timing controller 400 may generate control signals (CON), a bias voltage (VB), a sensing enable signal (S_EN), a sensing auto-zero signal (S_AZ), and a clamp enable signal (C_EN), for controlling the operation of the clamp control circuit 100. The timing controller 400 may generate the control signal (RCON) for controlling the operation of the ramp generator 200. The timing controller 400 may generate an auto-zero signal (AZ) and a counter enable signal (CNT_EN) for controlling the operation of the ADC 300.

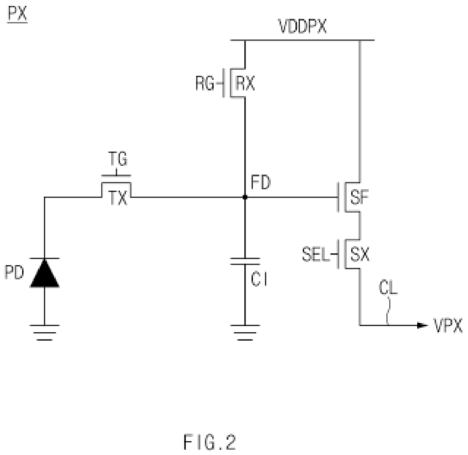

FIG. 2 is a circuit diagram illustrating a pixel (PX) of the pixel array shown in FIG. 1 based on some embodiments of the present disclosure.

Referring to FIG. 2, the pixel (PX) may be one of a plurality of pixels included in the pixel array (PA). Although FIG. 2 illustrates only one pixel (PX) for convenience, the scope and concepts of the present disclosure are not limited thereto, and other pixels may also have substantially the same structure and operation as those of the pixel (PX).

The pixel (PX) may include a photoelectric conversion element (PD), a transfer transistor (TX), a reset transistor (RX), a floating diffusion region (FD), a first capacitor (C1), a source follower transistor (SF), and a selection transistor (SX). Although FIG. 2 shows that the pixel (PX) includes one photoelectric conversion element (PD), the scope and concepts of the present disclosure are not limited thereto, and the pixel (PX) according to another embodiment may also be implemented as a shared pixel having a plurality of photoelectric conversion elements (PDs). In this embodiment, a plurality of transfer transistors may be provided corresponding to the plurality of photoelectric conversion elements.

Each of the photoelectric conversion elements (PDs) may generate and accumulate photocharges corresponding to the intensity of incident light. For example, each of the photoelectric conversion elements (PDs) may be implemented as a photodiode, a phototransistor, a photogate, a pinned photodiode, or a combination thereof. If the photoelectric conversion element (PD) is implemented as a photodiode, the photoelectric conversion element (PD) may be a region that is doped with second conductive impurities (e.g., N-type impurities) in a substrate including first conductive impurities (e.g., P-type impurities).

The transfer transistor (TX) may be coupled between the photoelectric conversion element (PD) and the floating diffusion region (FD). The transfer transistor (TX) may be turned on or off in response to a transfer control signal (TG). If the transfer transistor (TX) is turned on by a transfer signal (TG) of a logic high level, photocharges accumulated in the corresponding photoelectric conversion element (PD) can be transmitted to the floating diffusion region (FD).

The reset transistor (RX) may be disposed between the floating diffusion region (FD) and the power-supply voltage (VDDPX) input terminal. The voltage of the floating diffusion region (FD) can be reset to the power-supply voltage (VDD) in response to a reset control signal (RG).

The floating diffusion region (FD) may accumulate photocharges received from the transfer transistor (TX). The floating diffusion region (FD) can be coupled to the first capacitor (C1) connected to a ground terminal. For example, the floating diffusion region (FD) may be a region that is doped with second conductive impurities (e.g., N-type impurities) in a substrate (e.g., a P-type substrate) including first conductive impurities. For example, the substrate and the impurity doped region can be modeled as the first capacitor (C1) acting as a junction capacitor. The floating diffusion region (FD) may be referred to as a sensing node.

In some embodiments, a logic high level may mean a voltage level for activating (e.g., turning on) a corresponding element (e.g., a transistor), and a logic low level may mean a voltage level for deactivating (e.g., turning off) a corresponding element (e.g., a transistor).

Although FIG. 2 shows an embodiment in which the floating diffusion region (FD) having only one capacitance is used for convenience, other embodiments are also possible, and the floating diffusion region (FD) may also have two or more capacitances. For example, the floating diffusion region (FD) may selectively receive additional capacitance by connecting to a dual conversion gain (DCG) transistor, so that the floating diffusion region (FD) may have two capacitances.

The source follower transistor (SF) may be coupled between the selection transistor (SX) and the power-supply voltage (VDDPX) input terminal, may amplify a change in electrical potential of the floating diffusion region (FD) that has received photocharges accumulated in the photoelectric conversion element (PD), and may transmit the amplified result to the selection transistor (SX).

The selection transistor (SX) may be coupled between the source follower transistor (SF) and the column line (CL). The selection transistor (SX) may be turned on by the selection control signal (SEL), so that the selection transistor (SX) can output the electrical signal received from the source follower transistor (SF) as the pixel signal (VPX).

In some embodiments, the operation of outputting the pixel signal (VPX) to transfer the voltage of the floating diffusion region (FD) to the column line (CL) through the source follower transistor (SF) and the selection transistor (SX) will hereinafter be referred to as a readout operation. A process of receiving charges from the photoelectric conversion element (PD) and turning the transfer transistor (TX) on and off to reduce the voltage of the floating diffusion region (FD) will hereinafter be referred to as an integration operation. The operation of charging the floating diffusion region (FD) based on the power-supply voltage (VDDPX) through the reset transistor (RX) will hereinafter be referred to as a reset operation.

FIG. 3 is a circuit diagram illustrating the clamp control circuit 100 shown in FIG. 1 based on some embodiments of the present disclosure.

Referring to FIG. 3, the clamp control circuit 100 may include a biasing circuit 110, a sensing circuit 120, and a clamping circuit 130.

The biasing circuit 110 may bias the column line (CL) through which the pixel signal (VPX) is output to the bias voltage (VB) level based on the control signals (CON1~ CON4) received from the timing controller 400.

The biasing circuit 110 may include a plurality of transistors (N1~N6). The plurality of transistors (N1~N6) may be implemented as NMOS transistors. For example, the biasing circuit 110 may bias a node (ND1) to the bias voltage (VB) level when the control signals (CON1~CON4) transition to a logic high level.

Transistors (N1~N3) may be connected in series between the node (N1) and the ground voltage (VSSPX) input terminal. The transistor (N1) may receive the control signal (CON1) through a gate terminal thereof. The transistor (N2) may receive the control signal (CON2) through a gate terminal thereof. Gate terminals of the transistors (N3, N6) may be commonly connected to each other. The transistor (N4) may be connected between the bias voltage (VB) input terminal and the transistor (N5), so that the transistor (N4) may receive the control signal (CON3) through a gate terminal thereof. The transistor (N5) may be connected between a drain terminal of transistor (N4) and a gate terminal of transistor (N3), so that the transistor (N5) may receive the control signal (CON4) through a gate terminal thereof. A source terminal and a drain terminal of the transistor (N6) are commonly connected to the ground voltage (VSSPX) input terminal, so that the transistor (N6) can operate as a MOS capacitor.

The sensing circuit 120 may detect the voltage level of the pixel signal (VPX) that is applied to the sensing node (ND1) when a sensing enable signal (S_EN) is activated, so that the sensing circuit 230 may output a sensing signal (VSEN). The sensing circuit 120 may output a clamp voltage control signal (CV) corresponding to the voltage level of the detected sensing signal (VSEN). The sensing circuit 120 may perform the auto-zero operation based on the sensing auto-zero signal (S_AZ), and may store the voltages of the nodes (ND1, ND2) in a capacitor (C2).

The sensing circuit 120 may include the plurality of transistors (P1, P2, N7) and the capacitor (C2). In one embodiment, the plurality of transistors (P1, P2) may be implemented as PMOS transistors. The transistor (N7) may be an NMOS transistor.

The transistor (P1) may be connected between the power-supply voltage (VDDPX) input terminal and a node (ND3), so that the transistor (P1) may receive the sensing signal (VSEN) through a gate terminal thereof. The transistor (P2) may be connected between the node (ND2) and the node (ND3), so that the transistor (P2) may receive the sensing auto-zero signal (S_AZ) through a gate terminal thereof. The capacitor (C2) may be connected between the node (ND1) and the node (ND2).

The transistor (N7) may be connected between the node (ND3) and the ground voltage (VSSPX) input terminal, so that the transistor (N7) may receive the sensing enable signal (S_EN) through a gate terminal thereof. The transistor (N7) may also be referred to as a "sensing activation circuit" that controls whether the sensing circuit 120 is activated based on the sensing enable signal (S_EN).

The clamping circuit 130 may control the level of the clamp voltage (CLP) that is output to the column line (CL) based on the clamp voltage control signal (CV) when the clamp enable signal (C_EN) is activated.

The clamping circuit 130 may include a plurality of transistors (N8, N9). In one embodiment, the plurality of transistors (N8, N9) may be implemented as NMOS transistors.

The transistors (N8, N9) may be connected in series between the power-supply voltage (VDDPX) input terminal and the column line (CL). The transistor (N8) may receive the clamp voltage control signal (CV) through a gate terminal thereof. The transistor (N8) may be referred to as a clamp transistor for controlling the level of the clamp voltage (CLP). The transistor (N9) may receive the clamp enable signal (C_EN) through a gate terminal thereof.

The transistor (N8) may operate as a source follower transistor having an input terminal connected to the sensing circuit 120. The clamp voltage (CLP) may be determined based on the voltage of the clamp voltage control signal (CV). The voltage of the column line (CL) may be determined based on the voltage of the pixel signal (VPX) and the clamp voltage (CLP).

That is, when all of the transistor (N8) and the transistor (N9) are turned on, the voltage that is output through the column line (CL) may be a voltage having a higher level from among the voltage of the pixel signal (VPX) and the clamp voltage (CLP). For example, when the voltage of the pixel signal (VPX) is greater than the clamp voltage (CLP), the voltage of the column line (CL) may be determined based on the voltage of the pixel signal (VPX). When the voltage of the pixel signal (VPX) is less than the clamp voltage (CLP), the voltage of the column line (CL) may be determined based on the clamp voltage (CLP).

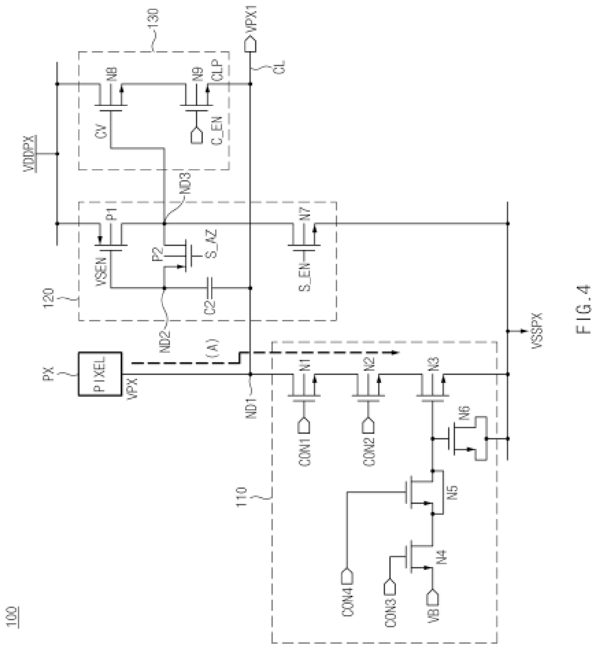

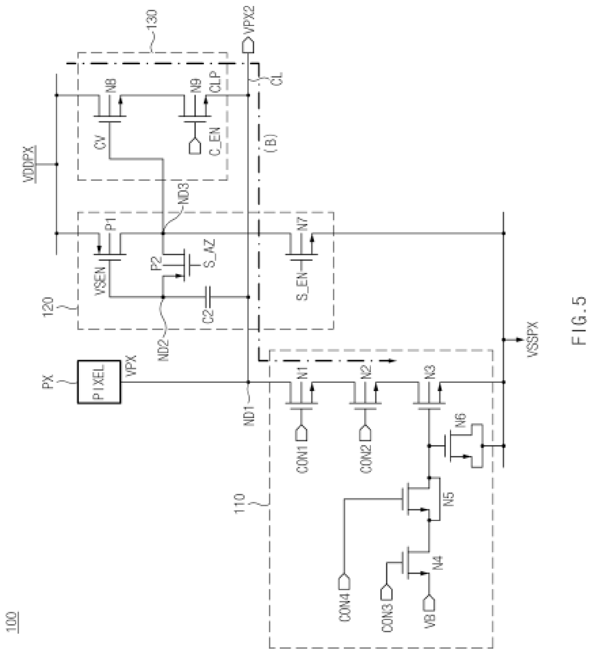

For example, the voltage of the floating diffusion region (FD) may decrease excessively compared to a target voltage. Accordingly, the voltage of the pixel signal (VPX) may decrease excessively. In one embodiment, the voltage of the column line (CL) may be determined based on the clamp voltage (CLP). The clamp control circuit 100 may adjust a voltage level of the column line (CL) not to be reduced to a specific voltage level or less based on the clamp voltage control signal (CV) corresponding to the sensing signal (VSEN). A more detailed operation of the clamp control circuit 100 will be described later with reference to FIGS. 4 and 5.

FIGS. 4 and 5 are diagrams illustrating operations of the clamp control circuit 100 shown in FIG. 3 based on some embodiments of the present disclosure.

In some embodiments, the clamp control circuit 100 may operate in one of the bias operation mode and the clamping operation mode. The operation mode of the clamp control circuit 100 may be controlled based on the clamp enable signal (C_EN). For example, when the clamping circuit 130 does not operate during deactivation of the clamp enable signal (C_EN), the clamp control circuit 100 may operate in the bias operation mode for sensing the voltage level of the pixel signal (VPX). On the other hand, when the clamping circuit 130 operates during activation of the clamp enable signal (C_EN), the clamp control circuit 100 may operate in the clamping operation mode for clamping the voltage level of the pixel signal (VPX).

First, an embodiment in which the clamp control circuit 100 operates in the bias operation mode will be described with reference to FIG. 4.

When the control signals (CON1~CON4) are activated, the transistors (N1~N6) are turned on, so that the node (ND1) may be biased to the bias voltage (VB) level. When the level of the sensing voltage (VSEN) increases in response to the pixel signal (VPX), the transistor (P1) may be turned off. When the transistor (P2) is turned on while the sensing auto-zero signal (S_AZ) is at a logic low level, the clamp voltage control signal (CV) may maintain a low voltage level (i.e., a voltage level (V2 to be described later) at which the clamping operation is not performed).

In the bias operation mode, the clamp enable signal (C_EN) is deactivated and the transistor (N9) is turned off, so that the clamping circuit 130 may not operate. Accordingly, the voltage level of the pixel signal (VPX) may be biased according to the voltage level of the node (ND1) and transmitted to the ADC 300 as in the path of (A).

An embodiment in which the clamp control circuit 100 operates in the clamping operation mode will be described with reference to FIG. 5.

When the control signals (CON1~CON4) are activated, the transistors (N1~N6) are turned on, so that the node (ND1) may be biased to the bias voltage (VB) level. When the sensing auto-zero signal (S_AZ) is at a logic low level during the auto-zero operation, the transistor (P2) is turned on, so that the voltages of the nodes (ND1, ND2) may be stored in the capacitor (C2). When the sensing auto-zero signal (S_AZ) transitions to a logic high level, the transistor (P2) may be turned off.

When the clamp enable signal (C_EN) is activated to a logic high level in the clamping operation mode, the transistor (N9) may be turned on. When the level of the sensing voltage (VSEN) decreases in response to the voltage level of the pixel signal (VPX), the transistor (P1) may be turned on. Accordingly, the voltage level of the clamp voltage control signal (CV) increases in response to the power-supply voltage (VDDPX) level, and the transistor (N8) may be turned on. As a result, the voltage level of the column line (CL) may increase to a higher level than the reference voltage (V3 to be described later) as in the path of (B) and then transmitted to the ADC 300.

To improve the reliability of image data by removing noise from the image sensor, the analog-to-digital conversion (ADC) operation using the correlated double sampling (CDS) technology may be performed. The reset sampling operation may be performed for the analog-to-digital conversion (ADC) operation.

When the reset sampling operation is performed, if the intensity of light incident upon the image sensor is excessively high, the voltage level of the reset signal (RG) may excessively decrease. Accordingly, there may occur a sunspot phenomenon (i.e., a black sun phenomenon) in which the image sensing device cannot properly recognize the image in the environment in which the intensity of light incident upon the pixel (PX) is at a high level. When the black sun phenomenon occurs, the pixel voltage decreases and it is possible to sufficiently sense (or detect) the pixel signal (VPX) due to the operating margin of the biasing circuit 110. To obviate the above concerns, the clamping circuit 130 may be used to prevent the voltage level of the column line from being lowered below a predetermined level.

However, if the voltage level of the clamp voltage control signal (CV) applied to the gate terminal of the transistor (N8) included in the clamping circuit 130 is fixed to a specific clamp voltage level, a leakage current generated in the clamp transistor may affect the sensing of the pixel signal (VPX). To solve the above issues, when the clamp margin is increased, the operating region of the pixel may be limited. That is, when a low power-supply voltage level or a pixel output signal with a large swing range is required, the input range of the ADC 300 may be reduced.

Accordingly, the image sensing device according to the present disclosure may detect the voltage level of the pixel signal (VPX) using the sensing circuit 120, and may control the level of the clamp voltage (CLP) of the clamp transistor in response to the detected sensing signal (VSEN). As a result, a leakage current caused by the clamp transistor may not occur, and a sufficient clamp margin can be secured under black sun conditions.

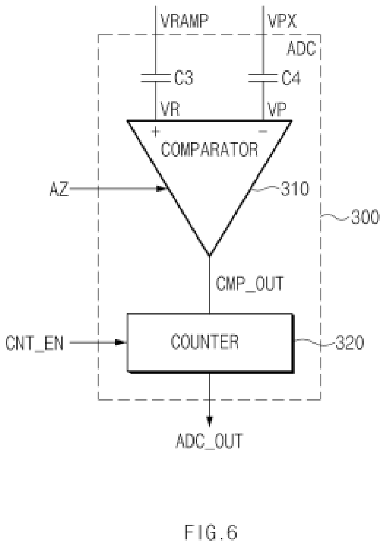

FIG. 6 is a circuit diagram illustrating the analog-to-digital converter (ADC) 300 shown in FIG. 1 based on some embodiments of the present disclosure.

Referring to FIG. 6, the ADC 300 may perform a reset sampling operation and a pixel sampling operation, and may output a difference between the result values of the sampling operations as a digital signal (i.e., ADC data ADC_OUT). The ADC 300 may obtain a reset voltage through the reset sampling operation, and may obtain a data voltage through the pixel sampling operation. In one embodiment, the reset voltage may be obtained when the voltage of the ramp signal (VRAMP) and the voltage of the column line (CL) become equal to each other after completion of the reset operation. The data voltage may be obtained when the voltage of the ramp signal (VRAMP) and the column line (CL) become equal to each other after completion of the accumulation operation. The ADC 300 may generate a digital signal for the image based on a difference between the data voltage and the reset voltage. In some embodiments, an input and output (input/output) (I/O) circuit may receive a digital signal from the ADC 300, and may output the digital signal as image data.

The ADC 300 may include a capacitor (C3), a capacitor (C4), a comparator 310, and a counter 320.

The capacitor (C3) may receive the ramp signal (VRAMP), and may transmit a delayed ramp signal (VR) to one input terminal of the comparator 310. The capacitor (C4) may receive the pixel signal (VPX), and may transmit a delayed pixel signal (VP) to the other input terminal of the comparator 310.

The comparator 310 may compare the delayed ramp signal (VR) with the delayed pixel signal (VP), may generate comparison data (CMP_OUT) based on the comparison result, and may transmit the comparison data (CMP_OUT) to the counter 320. According to one embodiment, if a voltage level of the delayed ramp signal (VR) is greater than a voltage level of the delayed pixel signal (VP), the comparator 310 may generate comparison data (CMP_OUT) of a logic high level. When a voltage level of the delayed ramp signal (VR) is less than a voltage level of the delayed pixel signal (VP), the comparator 310 may generate comparison data (CMP_OUT) of a logic low level. That is, the comparison data (CMP_OUT) may represent the magnitude relationship between the ramp signal (VRAMP) and the pixel signal (VPX).

The comparator 310 may perform the auto-zero operation according to the auto-zero signal (AZ). In one embodiment, the auto-zero operation may refer to an operation of performing adjustment between the voltage level of the delayed ramp signal (VR) and the voltage level of the delayed pixel signal (VP) for comparison between the delayed ramp signal (VR) and the delayed pixel signal (VP). The comparator 310 may perform the auto-zero operation in a time period where the auto-zero signal (AZ) is at a logic high level. The auto-zero signal (AZ) may be generated and supplied by the timing controller 400.

The counter 320 may be activated in response to a counter enable signal (CNT_EN) received from the timing controller 400. The counter 320 may perform the counting operation until the ramp signal (VRAMP) matches the analog pixel signal (VPX). Then, the activated counter 320 may perform counting in response to comparison data (CMP_OUT) of the logic high level, and may output the counting result as ADC data (ADC_OUT).

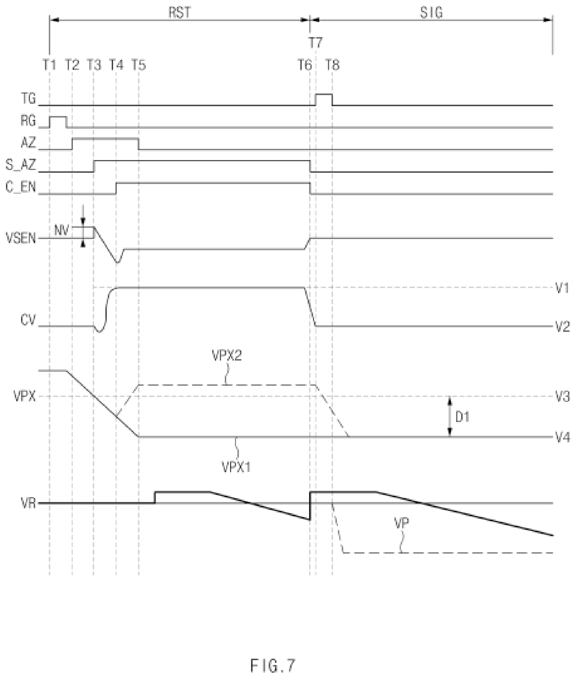

FIG. 7 is a timing diagram illustrating operations of the image sensing device according to the embodiment of FIG. 3.

Referring to FIG. 7, the operation of converting the pixel signal (VPX) into image data may be divided into a reset period (RST) and a signal period (SIG). The reset period (RST) may be a time period for performing AD (analog-to-digital) conversion on the reference signal of the pixel (PX), and the signal period (SIG) may be a time period for performing AD conversion on the image signal of the pixel (PX). A time period from T1 to T6 will be defined as a reset period. A time period located after each of the time point T7, the time point T8, and the time point T9 will be defined as a signal period. For example, a reset sampling operation may be performed during the time period from T1 to T6.

At the time point (T1), a read operation may be performed to perform the reset sampling operation. For the read operation, the selection transistor (SX) may be turned on, and the voltage of the column line (CL) may be determined based on the pixel signal (VPX). The voltage of the pixel signal (VPX) may be determined based on the voltage level of the floating diffusion region (FD). The floating diffusion region (FD) may be in a reset state obtained by the reset operation. The voltage of the floating diffusion region (FD) may be a voltage that is reset based on the power-supply voltage (VDDPX). Therefore, when the selection transistor (SX) is turned on to perform the reset sampling operation, the voltage level of the column line (CL) may be determined based on the voltage of the reset floating diffusion region (FD).

That is, as the reset signal (RG) has a logic high level, the pixel signal (VPX) corresponding to the voltage of the reset floating diffusion region (FD) may be output from the pixel (PX). Then, the sensing circuit 120 may output the sensing signal (VSEN) corresponding to the voltage level of the pixel signal (VPX). The clamp control circuit 100 may operate in the biasing operation mode as described above in FIG. 4, when the clamp enable signal (C_EN) is deactivated.

At the time point (T2), the reset signal (RG) may transition to a logic low level. Then, as the auto-zero signal (AZ) has a logic high level, the comparator 310 may perform the auto-zero operation between the ramp signal (VRAMP) and the pixel signal (VPX). When the black sun phenomenon occurs, the voltage level of the sensing signal (VSEN) may decrease with a negative(-) slope.

At the time point (T3), the sensing auto-zero signal (S_AZ) and the sensing enable signal (S_EN) may transition to a logic high level. As a result, the voltage level of the sensing signal (VSEN) may be discharged and gradually decreased according to the voltage level of the pixel signal (VPX). At the time point (T3), the voltage level of the sensing signal (VSEN) may instantaneously increase by an offset value according to the switching noise (NV) of the transistors. As the voltage level of the sensing signal (VSEN) decreases, the voltage level of the clamp voltage control signal (CV) may gradually increase.

At the time point (T4), the clamp enable signal (C_EN) may transition to a logic high level. The clamp control circuit 100 may operate in the clamping operation mode as described above in FIG. 5, when the clamp enable signal (C_EN) is activated.

When the voltage level of the sensing signal (VSEN) decreases to a low voltage level, the voltage level of the clamp voltage control signal (CV) may maintain the V1 voltage level. In one embodiment, the V1 voltage may be obtained by subtracting a drain-source voltage (VDS) of the transistor (P1) from the power-supply voltage (VDDPX). When the voltage level of the clamp voltage control signal (CV) increases by the V1 voltage level, the voltage level of the column line (CL) may also increase above the reference voltage (V3). In one embodiment, the reference voltage (V3) may be set to the voltage level of the reset signal (RG) as described above.

For example, in the biasing operation mode, since the clamping circuit 130 does not operate, the voltage level of the pixel signal (referred to as 'VPX1' in the biasing operation mode) may be a V4 voltage level. In one embodiment, the V4 voltage may be a voltage level corresponding to a leakage current of the selection transistor (SX). In another embodiment, the V4 voltage may be a voltage level corresponding to the bias voltage (VB).

In the clamping operation mode, the clamping circuit 130 operates so that the voltage level of the pixel signal (referred to as 'VPX2' in the clamping operation mode) may increase above the reference voltage (V3).

As described above, the image sensing device according to embodiments of the present disclosure may secure the clamping operation margin by increasing the voltage level of the pixel signal (VPX) above the reference voltage (V3) level in the clamping operation mode. That is, the operating margin of the pixel signal (VPX) applied to the ADC 300 should be greater than or equal to D1, so that the input range of the ADC 300 may secure a maximum swing range and the digital code that is output from the ADC 300 may be generated as the maximum code.

Afterwards, at the time point T5, since the auto-zero signal (AZ) has a logic low level, so that the auto-zero operation of the comparator 310 may be stopped. Then, the pixel signal (VPX1 or VPX2) may maintain the voltage level.

Subsequently, to perform the reset sampling operation, an offset may be applied to the ramp signal (VRAMP). Accordingly, the ramp generator 200 may output the ramp signal (VRAMP) that first maintains a voltage level that has increased by a ramp offset and then decreases with a negative(-) slope. In one embodiment, the ramp offset may be a value indicating the degree to which a voltage level of ramping (rising or falling) changes from the voltage level at which auto-zeroing is performed due to the characteristics of the ramp generator 200. After a predetermined time has elapsed, the ramp delay signal (VR) may decrease with a negative(-) slope in response to the ramp signal (VRAMP) after lapse of a delay time caused by the capacitor (C3) in the ADC 300.

Subsequently, at the time point (T6), when the sensing auto-zero signal (S_AZ) and the clamp enable signal (C_EN) transition to a low level, the clamp operation mode may be terminated. The level of the sensing voltage (VSEN) may increase again in response to the voltage level of the pixel signal (VPX). Then, when the level of the sensing voltage (VSEN) increases, the voltage level of the clamp voltage control signal (CV) may decrease to the level of the clamp reference voltage (V2). In one embodiment, the clamp reference voltage (V2) may be set to a low voltage level at which the transistor (N8) of the clamping circuit 130 is not turned on (not exceeding a threshold voltage). That is, the voltage of the column line (CL) when the selection transistor (SX) is turned on to perform the reset sampling operation may be referred to as the clamp reference voltage (V2). As the signal period (SIG) starts, the delayed ramp signal (VR) may return to the ramp upper limit value, and may drop with a negative(-) slope after lapse of a predetermined time.

Then, at the time point (T7), since the transfer signal (TG) temporarily has a logic high level, the pixel signal (VPX) corresponding to the voltage of the floating diffusion region (FD) in which photocharges generated from the pixel (PX) are accumulated may be output from the pixel (PX). The voltage level of the pixel signal (VPX) may fall according to the amount of photocharges accumulated in the floating diffusion region (FD).

Thereafter, at the time point (T8), the delayed pixel signal (VP) may transition to a low level corresponding to the voltage level of the pixel signal (VPX).

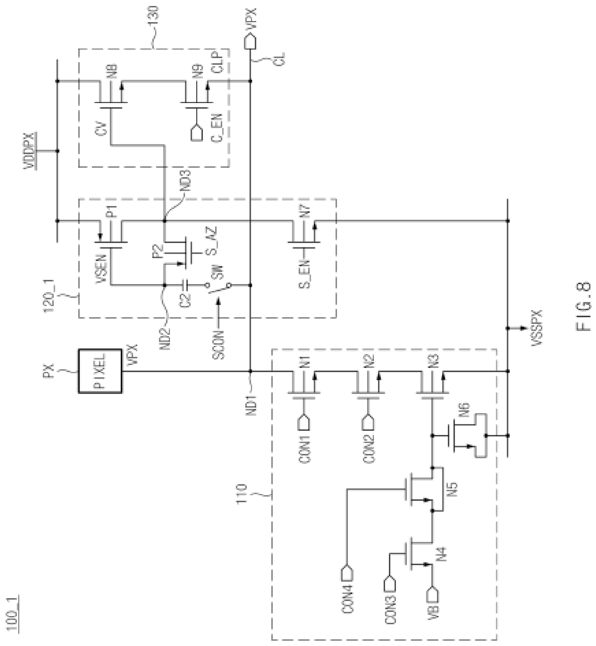

FIG. 8 is a circuit diagram illustrating another embodiment of the clamp control circuit shown in FIG. 1 based on the present disclosure.

Referring to FIG. 8, the clamp control circuit 100_1 may include a biasing circuit 110, a sensing circuit 120_1, and a clamping circuit 130. The clamp control circuit 100_1 according to the embodiment of FIG. 8 is different from the clamp control circuit 100 of FIG. 3 in the configuration of the sensing circuit (120_1). Therefore, in the embodiment of FIG. 8, redundant descriptions of the same configuration and operation as those of FIG. 3 will herein be omitted for brevity and only the remaining parts different from those of FIG. 3 will be described in detail with reference to FIG. 8.

The sensing circuit 120_1 may include a plurality of transistors (P1, P2, N7), a capacitor (C2), and a switch (SW). In one embodiment, the switching operation of the switch (SW) may be controlled by a switch control signal (SCON). The switch control signal (SCON) may be a signal received from the timing controller 400.

When the switch control signal (SCON) is activated, the switch (SW) may be turned on. As a result, the operation of storing the voltage of the pixel signal (VPX) in the capacitor (C2) may be performed. On the other hand, when the switch control signal (SCON) is deactivated, the switch (SW) may be turned off, and one terminal of the capacitor (C2) may be in a floated state. Accordingly, the voltage level of the sensing signal (VSEN) may be reduced by a certain level in response to the voltage stored in the capacitor (C2).

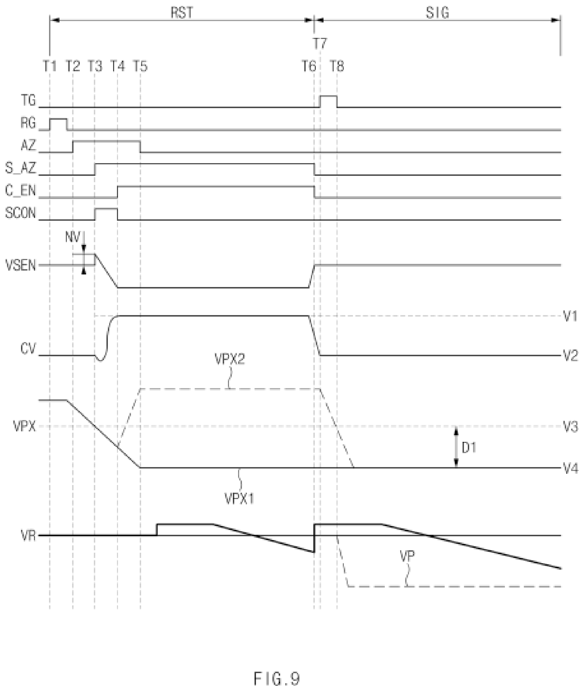

FIG. 9 is a timing diagram illustrating operations of the image sensing device according to the embodiment of FIG. 8.

In the embodiment of FIG. 9, duplicate descriptions of the same operations as those of FIG. 7 will herein be omitted for brevity, and only different components from those of FIG. 7 will be described in detail with reference to FIG. 9.

Referring to FIG. 9, the switch control signal (SCON) may be activated to a logic high level before the clamp enable signal (C_EN) transitions to a logic high level in the time period (T3). Accordingly, the switch (SW) may be turned on so that the voltage level of the sensing signal (VSEN) may be discharged and gradually decreased according to the voltage level of the pixel signal (VPX). In the time period (T3), the voltage level of the pixel signal (VPX) may be detected and stored in the capacitor (C2) according to the turn-on state of the switch (SW).

In the time period (T4), the control signal (SCON) may transition to a logic low level and the clamp enable signal (C_EN) may transition to a logic high level. Accordingly, the switch (SW) is turned off to decrease the voltage level of the sensing signal (VSEN), thereby maintaining a constant voltage level.

In the time period (T4), the switch (SW) is turned off, so that the path between the capacitor (C2) and the column line (CL) may be blocked. Then, the path of the leakage current flowing to the column line (CL) is blocked, so that the voltage charged in the capacitor (C2) can increase and a voltage-level decrease range of the sensing signal (VSEN) can increase compared to FIG. 7. Accordingly, in the embodiment of FIG. 9, the voltage level of the pixel signal (VPX2) can increase in the clamping operation mode compared to FIG. 7.

As is apparent from the above description, the image sensing device according to the embodiments of the present disclosure can prevent the black sun phenomenon by improving the clamp margin of the pixel signal, thereby improving a dynamic range.

The embodiments of the present disclosure may provide a variety of advantageous effects capable of being directly or indirectly recognized by one of ordinary skill in the art.

Although a number of illustrative embodiments have been described, it should be understood that modifications and enhancements to the disclosed embodiments and other embodiments can be devised based on what is described and/or illustrated in the present disclosure. Furthermore, the embodiments may be combined to form additional embodiments.

## Claims

1. A clamp control circuit comprising:
a sensing circuit configured to sense a voltage level of a pixel signal to output a sensing signal; and
a clamping circuit coupled to a column line, and configured to control a voltage level of a clamp voltage control signal in response to a voltage level of the sensing signal, and control a level of a clamp voltage in response to a clamp enable signal, the clamp voltage controlled based on a voltage level of the clamp voltage control signal and provided to the column line.

2. The clamp control circuit according to claim 1, wherein the sensing circuit includes:
a first capacitor connected between a first node to which the pixel signal is applied and a second node;
a first transistor connected between the second node and a third node and configured to perform a switching operation in response to a sensing auto-zero signal; and
a second transistor connected between a power-supply voltage input terminal and the third node and having a gate terminal connected to the second node.

3. The clamp control circuit according to claim 2, wherein the sensing circuit further includes:
a switch connected between the first node and the first capacitor and configured to perform a switching operation in response to a switch control signal.

4. The clamp control circuit according to claim 1, wherein the sensing circuit includes:
a sensing activation circuit configured to control activation of the sensing circuit based on a sensing enable signal.

5. The clamp control circuit according to claim 4, wherein the clamping circuit further includes:
a third transistor connected between a power-supply voltage input terminal and a fourth node and configured to receive the clamp voltage control signal through a gate terminal thereof; and
a fourth transistor connected between the fourth node and the column line and configured to receive the clamp enable signal through a gate terminal thereof.

6. The clamp control circuit according to claim 1, wherein
in a bias operation mode, the clamping circuit deactivates the clamp enable signal to control the column line to a voltage level corresponding to the pixel signal.

7. The clamp control circuit according to claim 1, wherein
in a clamping operation mode, the clamping circuit activates the clamp enable signal to control the column line to a level of the clamp voltage.

8. The clamp control circuit according to claim 1, further comprising:
a biasing circuit configured to bias the column line to a bias voltage level based on control signals.

9. The clamp control circuit according to claim 8, wherein the biasing circuit includes:
a fifth transistor connected between a first node to which the pixel signal is applied and a fifth node and controlled in response to a first control signal;
a sixth transistor connected between the fifth node and a sixth node and controlled in response to a second control signal;
a seventh transistor connected between the sixth node and a ground voltage input terminal and having a gate terminal connected to a seventh node;
an eighth transistor connected between a bias-voltage input terminal and an eighth node to receive a third control signal;
a ninth transistor connected between the eighth node and the seventh node and controlled in response to a fourth control signal; and
a tenth transistor including source and drain terminals commonly connected to a ground voltage input terminal and a gate terminal connected to the seventh node, and
wherein the control signals include the first to fourth control signals.

10. An image sensing device comprising:
a pixel configured to output a pixel signal to a column line;
a clamp control circuit configured to sense a voltage level of the pixel signal to output a sensing signal, and control, in a clamping operation mode, a clamp voltage in response to the sensing signal, the clamp voltage controlled to a level greater than or equal to a reference voltage and provided to the column line; and
an analog-to-digital converter (ADC) configured to perform an analog-to-digital conversion operation on a voltage of the column line based on a ramp signal.

11. The image sensing device according to claim 10, wherein
the voltage of the column line is determined based on the voltage level of the pixel signal when a reset signal is activated at a first time point.

12. The image sensing device according to claim 11, wherein
the analog-to-digital converter (ADC) further performs an auto-zero operation in response to an auto-zero signal at a second time point after the first time point.

13. The image sensing device according to claim 10, wherein the clamp control circuit includes:
a sensing circuit configured to sense the voltage level of the pixel signal to output the sensing signal; and
a clamping circuit configured to control a voltage level of a clamp voltage control signal in response to a voltage level of the sensing signal, and control a level of the clamp voltage in response to a clamp enable signal, the level of the clamp voltage controlled based on the voltage level of the clamp voltage control signal.

14. The image sensing device according to claim 13, wherein
the sensing circuit operates in response to a sensing auto-zero signal, such that the voltage level of the sensing signal decreases according to the voltage level of the pixel signal.

15. The image sensing device according to claim 13, wherein the sensing circuit includes:
a first capacitor connected between a first node to which the pixel signal is applied and a second node;
a first transistor connected between the second node and a third node and configured to perform a switching operation in response to a sensing auto-zero signal; and
a second transistor connected between a power-supply voltage input terminal and the third node and having a gate terminal connected to the second node.
